# EUROPEAN PATENT APPLICATION

(11) **EP 3 503 569 A1**
(43) Date of publication of application: **26.06.2019**
(21) Application number: 17306819.8
(22) Date of filing: 19.12.2017
(51) Int. Cl.: H04N 21/45, G09G 5/12

(54) **METHOD OF TRANSMITTING VIDEO FRAMES FROM A VIDEO STREAM TO A DISPLAY AND CORRESPONDING APPARATUS**

(71) Applicant: THOMSON LICENSING, 92130 Issy les Moulineaux (FR)
(72) Inventor: QUERE, Thierry, 35576 Cesson-Sévigné Cedex (FR); DAVID, Franck, 35576 Cesson-Sévigné Cedex (FR); BEASSE, Roland, 35576 Cesson-Sévigné Cedex (FR)
(74) Representative: Huchet, Anne

(57) **Abstract**

In a video streaming system, latency between decoding of video frames and rendering of these video frames on a display is reduced. A video encoding frame rate is obtained for a received video stream. Display supported refresh rates are obtained from the display. Among the display supported refresh rates a refresh rate is selected that is a multiple of the video encoding frame rate. The selected refresh rate is transmitted to the display in a configuration command and the video frames are transmitted to the display.

## Description

### FIELD

The present disclosure generally relates to the field of processing of video and/or audio streams and particularly, but not exclusively, to the processing of video and/or audio streams with low rendering latency in a context where low latency video and/or audio rendering is key.

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

In environments where video and/or audio encoding are executed by a remote computing device at real-time, the computing of video and/or audio frames is executed on a distant server, for example in the cloud. This is commonly referred to as virtualization. For example, in a cloud gaming system, a cloud gaming server computes video and/or audio frames as a function of a player's actions on a game console. The cloud server encodes the thus computed video and/or audio frames and transmits these in a video and/or audio stream to the player's game console. The latter decodes the video and/or audio stream and outputs the result to a video and/or audio rendering device. This is a technical solution that is different from non-cloud gaming, where a video game is executed on the player's game console and video and/or audio frames are computed by the game console. One of the advantages of cloud gaming with regard to non-cloud gaming is that it does not require high performance game consoles. However, latency between the player's input actions and the rendering of the video and/or audio frames that are modified according to the player's input actions is increased and can become critical to a point where the user experience is adversely affected, causing for example visible/audible jitter, tearing and stutter. Accordingly, it is desirable to reduce this latency and to improve the user experience.

### SUMMARY

Accordingly, the present disclosure provides a mechanism to achieve low video and/or audio rendering latency in environments where video and/or audio frames are computed remotely and where this latency is critical.

To this end, there is defined according to the present principles a method of transmitting video frames from a video stream to a display. The method comprises receiving a video stream, obtaining a video encoding frame rate of the video stream, obtaining display supported refresh rates for the display, selecting among the display supported refresh rates a refresh rate that is a multiple of the video encoding frame rate, sending a display mode configuration command to the display, the display mode configuration command comprising the selected refresh rate, and sending video frames of the video stream to the display device.

According to an embodiment of the method, the multiple of the video encoding frame rate is an integer multiple.

According to a different embodiment of the method, the sending of the display mode configuration command to the display is triggered by receipt of a decoded video frame from a video decoder in the receiver device.

According to a different embodiment of the method, the method further comprises obtaining the encoding video frame rate from measuring inter- video frame arrival rate.

According to a different embodiment of the method, the method further comprises obtaining the encoding video frame rate from signalization related to the video stream.

According to a different embodiment of the method, the signalization is obtained from information comprised in the video stream according to Sequence Parameter Set or according to Picture Parameter Set.

According to a different embodiment of the method, the display supported refresh rates is obtained from the display by reading information provided by the display.

According to a different embodiment of the method, the information provided by the display is Extended Display Identification Data.

The present principles also relate to a device for transmission of video frames from a video stream to a display. The device comprises a network interface configured to receive a video stream, at least one processor (702), configured to obtain a video encoding frame rate of the video stream, to obtain display supported refresh rates for the display, and to select among the display supported refresh rates a refresh rate that is a multiple of the video encoding frame rate. The device further comprises a display interface configured to send a display mode configuration command to the display, the display mode configuration command comprising the selected refresh rate, and to send video frames from the video stream to the display device.

According to an embodiment of the device, the at least one processor is configured to select an integer multiple of the video encoding frame rate.

According to a different embodiment of the device, the at least one processor is further configured to trigger the sending of the display mode configuration command to the display by receipt of a decoded video frame from a video decoder.

According to a different embodiment of the device, the at least one processor is further configured to obtain the encoding video frame rate from measuring inter- video frame arrival rate.

According to a different embodiment of the device, the at least one processor is further configured to obtain the display supported refresh rates from the display by reading information provided by the display.

According to a different embodiment of the device, the device is a Set Top Box.

According to a different embodiment of the device, the device is a mobile communication device.

### BRIEF DESCRIPTION OF THE DRAWINGS

More advantages of the present disclosure will appear through the description of particular, non-restricting embodiments. To describe the way the advantages of the present disclosure can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring the disclosure. The embodiments will be described with reference to the following drawings in which:
**Figure 1** is an exemplary system in which the present principles can be applied.
**Figures 2a and 2b** show how video latency, video jitter, video stuttering and video tearing are induced by a difference between encoder/decoder video frame rate and display refresh rate.
**Figure 3** shows how constant latency is caused by encoder/decoder video frame rate desynchronization with a video display's refresh.
**Figure 4** shows how latency is reduced according to different embodiments of the present principles.
**Figure 5** is a further embodiment according to which the latency between the output of a decoded frame by the receiver's decoder and the display of the frame is further reduced by selectively choosing the moment of the transmission of the configuration command to the display.
**Figure 6** is an embodiment of a receiver device **106** according to the present principles.
**Figure 7** is a different embodiment of a receiver device **106** according to the present principles.
**Figure 8** is an exemplary method **800** of transmitting video frames from a video stream to a display.

It should be understood that the drawings are for purposes of illustrating the concepts of the disclosure and are not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

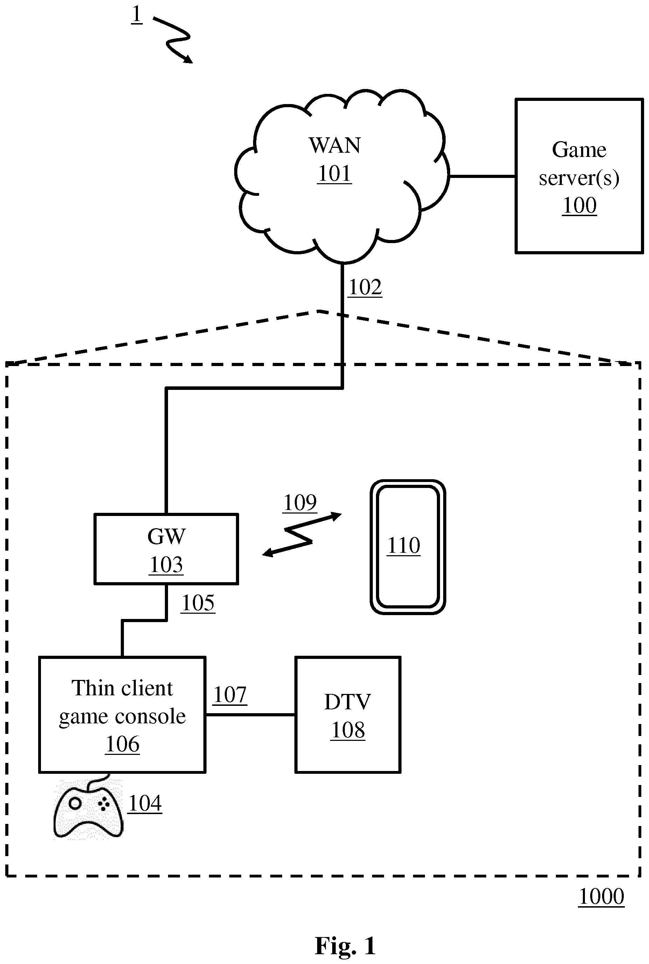

**Figure 1** is an exemplary system **1** for application of the present principles. Cloud gaming is a kind of online gaming solution that allows direct and on-demand video streaming of games to computers, consoles and mobile devices, using a thin client. The actual game is stored, executed, and audio/video frames are computed on server(s) in the cloud. The audio/video results are streamed directly to a player's game console, a thin client, over a data communication network. This allows players to access games without the need to buy and install a high-performance game console that becomes obsolete when higher performance is required to play the latest games. Controls and button presses from the player's game console are transmitted by the console to the cloud server(s), and the cloud server(s) then send(s) the game's response to the controls and button presses back to the game console. The thin client may be implemented in hardware or in software. For example, the thin client may be software that is installed on the player's PC when buying a game package via the Internet. For example, the thin client may be included in a smartphone application that is purchased by a consumer, downloaded and installed on his mobile phone.

System **1** is a typical cloud gaming environment. It includes an access to a Wide Area Network (WAN) **101** (e.g., the Internet), to which is(are) connected, via a data communication link **102,** (a) game server(s) **100** and a consumer's Internet access gateway (GW) **103** in a consumer premises **1000.** The gateway **103** provides a wired network **105** and wireless network **109** in the consumer premises **1000** for connecting a thin client game console **106,** and for connecting a mobile device **110,** e.g., a portable PC, a tablet or a smart phone. Thin client game console **106** connects to the digital TV **108** for audio/video rendering via an audio/video link, such as High Definition Multimedia Interface (HDMI). A gamepad **104** is connected to thin client game console **106.** A player (not shown) can play a video game via thin client game console **106.** The player's actions are input via gamepad **104.** Thin client game console **106** interfaces with game server(s) **100.** The video and audio frames of the game and the modifications to the video and audio frames are computed by game server(s) **100** as a function of the player's actions. Game server(s) **100** may be implemented by a plurality of servers that may be in distributed form, such as a pool of (cloud) computing resources. Mobile device **110** may include a thin client application which enables the device to be used as a console for the purpose of a game. Instead of being connected to the game console **106** via link **107,** the digital TV **108** may be connected to network **105** and includes a thin client, in which case the use of a dedicated thin client game console **106** is not required. Alternatively, the network **105** includes a Set Top Box (not shown), in which the thin client is included.

For the cloud gaming system **1** to function in satisfactory way, the latency (lag, delay) between a player's actions and rendering via the thin client of the images and audio modified by the game server(s) according to the player's actions should be unnoticeable for the player. This latency has several causes. A first cause is a transmission/reception latency. This latency is composed of a time required for the transmission of a player's action to the game server(s) and a time required for receipt by the thin client of the resulting modified audio/video frames. This latency can be reduced with an optimized network infrastructure for example using fiber optic network cables and intelligent network switches that give high priority to real-time data traffic. A second cause is the latency caused by the computing time required for computing the modifications to the video and audio frames as a function of the input actions received from the player. This latency can be reduced by using high performance computing resources. A third cause, which is the subject of the present disclosure, is a latency caused by non-synchronization of the video frame rate used by the game server(s) video encoder and the refresh rate of the video display. In the following, it is considered that the decoding frame rate of the thin client's video decoder is the same as the encoding frame rate of a received video stream, since the decoder clock of the thin client is synchronized with the encoding clock received by the thin client. Drift between the encoding and decoding clock is not considered here. It is further assumed that the encoding frame rate of the video stream from the game server is constant (unlike in non-cloud gaming systems) since the video encoding server has sufficient resources to maintain a constant encoding frame rate independently of a complexity of the images to compute. The game server's video encoder may encode video frames at a constant frame rate of, for example, 25, 30, 50, 60 or 100 frames per second (fps). The thin client's video decoder will decode video frames according to this encoding frame rate. However, the display's refresh rate may be different from the encoding frame rate and thus from the thin client's video decoder decoding frame rate. This mismatch results in an irregular video frame display, even possibly in loss of video frames, introducing display jitter, tearing and stutter as will be explained further on. The introduced artefacts may be noticeable to the player by a 'jerky' reaction of the game to the player's actions, and visible distortion of the image may adversely affect the player's user experience. Tearing, or screen tearing, is a visual artefact in video display where a display device shows information from multiple video frames in a single screen refresh and occurs when the video feed of the display is not in sync with the display's refresh rate. In other real-time video environments than video gaming, such as telesurgery (remote surgery) or teleoperation (remote operation, operating or controlling a machine's actions from a remote location), possibly via immersive technologies such as virtual reality (VR) or augmented reality, the discussed latency may become critical when a jerky reaction of the video to the surgeon's or remote operator's actions or image distortions renders the telesurgery or teleoperation less precise.

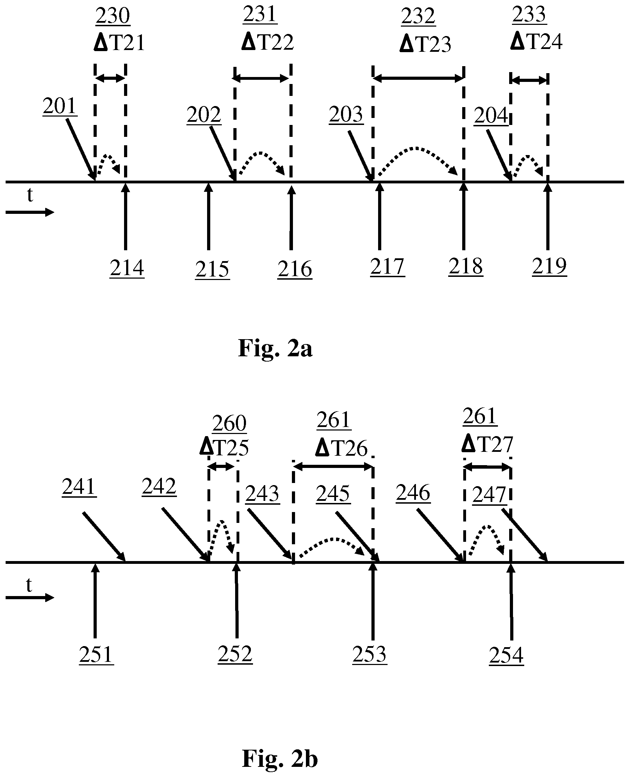

**Figures 2a** and **2b** show how video latency, video jitter, video stuttering and video tearing are induced by difference between video encoder/decoder frame rate and display refresh rate. Horizontally is shown a timeline on which time evolves from left to right. Arrows above this timeline indicate output by a video decoder of a receiver device such as in a thin client in device **106** or in smart phone **110** of new decoded frames received from a remote video computing source such as server **100.** Arrows below the timeline indicate video frame refresh of a display device such as DTV **108** or of a display integrated in smart phone **110.** Any additional latencies and jitter caused by network transfer, reception buffering and decoding in the receiver device which cause latency or jitter between output by the server of a new encoded frame and output by the receiver's decoder of the resulting decoded frame are not shown. In figures 2a and 2b the video encoding frame rate of the video encoder in the remote video computing source (and thus the video decoding frame rate in the receiver device) is different from the refresh rate of the display device. In figure 2a the video encoding frame rate is 30 fps, while the display refresh rate is 50 fps. In figure 2b this situation is inversed. This means that in figure 2a a new encoded video frame produced by the remote video computing source is output by the receiver device's video decoder every 33ms approximately (as mentioned above, additional latencies due to network transport, buffering and decoding processing at the receiver side are not taken into account). In figure 2b, a new encoded video frame is output by the receiver device's video decoder every 20ms. Decoded video frames are thus output by the receiver device and transmitted to the display device every 20ms for figure 2a and about every 33ms for figure 2b. Now supposing that a player's action, e.g., a pan or zoom action or any other action having an incidence on the displayed image, was transmitted to the server **100** and a modified video frame was computed and encoded by the server **100** according to the player's action, referring now to figure 2a, at **201,** this newly computed video frame is received by the receiver device and output to the display (e.g., by a display driver and/or display interface or display port). At **214,** the display is refreshed and the new video frame **201** is displayed (rendered) on the display. A delay of deltaT21 (reference **230)** of seven milliseconds (7ms) has passed between output of the decoded frame and its display. At **215,** the last video frame output by the receiver's video decoder is not yet replaced by a newly decoded video frame. The display device therefore repeats the display (rendering) of the last displayed video frame. At **202,** a new video frame is output by the receiver's video decoder. The display is refreshed at **216** and this new video frame is therefore displayed at **216** with a delay of deltaT22 (reference **231)** of 13ms. At **203,** a new video frame is output by the receiver's video decoder and transmitted to the display. Depending on the display implementation, the display repeats the display of the previously displayed video frame because the delay between receipt of the new video frame **203** by the display and its refresh **217** is too short for the display to process the newly received video frame. However, display will render the newly received video frame at the next refresh **218,** that is, only after a deltaT23 (reference **232)** of 21ms. The video frames produced by the receiver's video decoder are thus rendered by the display with variable latency, causing a possibly visible jitter effect. Alternatively, and again depending on the display implementation, the display, not having enough time to render the newly received video frame **203** arrived just before refresh **217,** may drop the newly received video frame. The video frame is then lost. The repeated display of video frames and the loss of video frames is the cause of a possible visible stutter effect. Alternatively, and again depending on display implementation, if a new video frame is output by the receiver's video decoder while the display is in the midst of a refresh, the display will render a part of the previous image and a part of the next image. If these images are different this will result in a visible distortion referred to as video tearing, e.g. the top part of the rendered image belonging to the previously decoded video frame and the bottom part of the rendered image belonging to the current decoded video frame. At **204,** a new video frame is output by the receiver's video decoder. The image belonging to the new video frame is rendered by the display upon refresh at **219,** i.e., after a deltaT24 (reference **233)** of 9ms.

In figure 2b, the situation is the inverse of that of figure 2a. New video frames are output from the receiver's video decoder at **241, 242, 243, 244, 245** and **246** (in figure 2a, the video decoding frame rate is lower than the display refresh rate, while this is the inverse in figure 2b). Display refreshes are done at **251, 252, 253,** and **254.** Depending on the display implementation, the video frame output at **241** is lost because it is replaced by the frame arriving at **242** before the next refresh is done at **252.** Frame 242 is rendered after deltaT25 (reference **260).** At **243,** a newly decoded video frame becomes available, and is rendered on the display upon refresh **253** after deltaT26 (reference **261).** At **244** and **245,** newly decoded frame become available. As the display is refreshed at **254,** frame **245** replaces frame **244,** and frame **244** is thus lost. This results in jittering (deltaT25, deltaT26 and deltaT27 each are different) and stuttering (frames **241** and **244** are lost). Alternatively, and depending on the receiver's video decoder implementation, the video frame **244** arrives when the display is in the midst of a refresh at **253,** which results in video tearing.

Thus, due to the difference between the server's video encoder frame rate (and thus the receiver's decoding frame rate) and the display's refresh rate, the latency between receipt of an updated video frame and its output to a display device is variable, resulting in video jitter; while at some occasions advantageously short, at other occasions it is disadvantageously long. Some video frames are repeated, others are dropped, resulting in video stuttering. Some video frames are partly rendered in a same refresh, resulting in video tearing. This adversely affects the user experience. In this context, it should be remembered that there are multiple causes for latency as described previously, and that these latencies are cumulative with the latencies above described. Any additional latency caused by a difference between video encoder and video display refresh rates may therefore result in exceeding a maximum accumulated latency, and/or jitter, tearing and/or stuttering requirement.

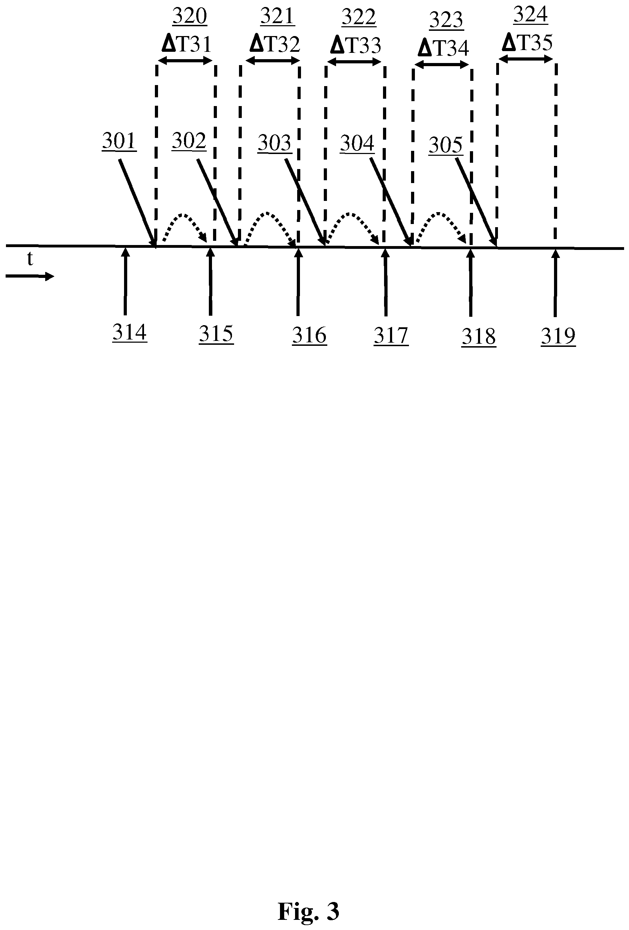

**Figure 3** shows how constant latency is caused by encoder (and thus decoder) video frame rate desynchronization with a display refresh. In contrast with figure 2, in figure 3, video encoder frame rate (and thus video decoder frame rate) and video display refresh rate are the same, e.g., 50 fps. References **301-305** refer to output of decoded video frames by the receiver's video decoder. References **314-319** refer to refreshes of the video display. References **320-324** refer to delays deltaT31-deltaT35 between output by the receiver's video decoder of a decoded video frame and display of that video frame by the display.

A new video frame is output by the decoder at **301.** However, the as the next display refresh is at **315,** the display will not render the decoded video frame until a delay deltaT31 (reference **320)** of 14ms, at **315.** This latency is constant if it is considered that there is no drift between video encoder and video decoder clocks: decoded video frames are output at **301, 302, 303, 304,** and **305,** and are rendered by the display at respectively **315, 316, 317, 318,** and **319;** each time the latency, respectively deltaT31 **(320),** deltaT32 **(321),** deltaT33 **(322),** deltaT34 **(323),** and deltaT35 **(324)** are the same. However, the constant latency may have a duration that is arbitrary between a low value when the display's refresh happens to occur just after the output of a video frame by the decoder and approximately the inverse of the frame rate (here, for 50 fps, the inverse of the frame rate is 20ms). Thus, while there is no jitter introduced here, the latency is arbitrary between an optimum short delay and a disadvantageous long delay. According to the video display implementation, video tearing may still occur when the display refreshes happen to fall just at approximately the same time the decoder outputs a new frame. Likewise, such configuration may be the cause of video stuttering when the decoder output of frames is too close to the moment of the display refresh.

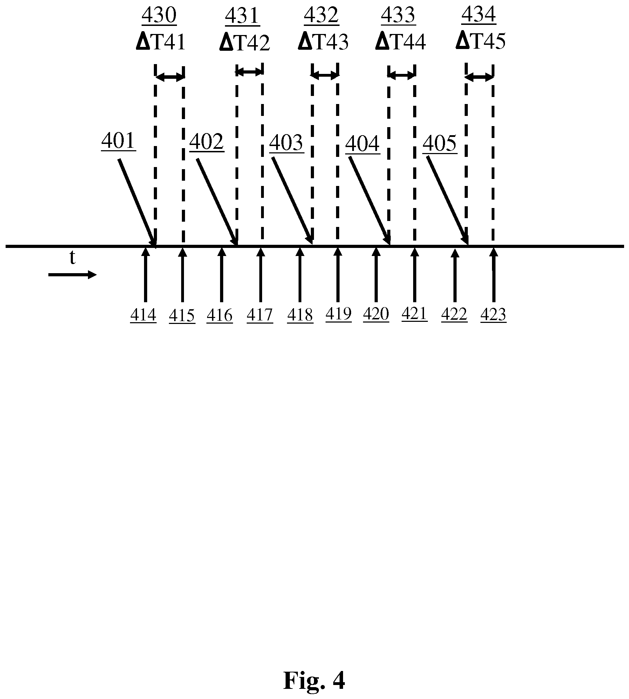

**Figure 4** shows how above discussed latency is reduced according to different embodiments of the present principles. References **401-405** are output of decoded video frames by the receiver's video decoder. References **414-423** are refreshes of a display coupled to the output of the video decoder. References **430-434** indicate delays deltaT41-deltaT45 between output of a decoded video frame by the receiver's video decoder and rendering of that video frame by the display. In figure 4a, the display refresh rate is set, for example by transmitting a HDMI configuration command, to an integer multiple of the video encoder's encoding frame rate (and thus of the video decoder frame rate), for example a multiplication factor 1, 2, 5 or 10. The maximum multiplication factor is limited by the maximum display refresh rate. Latency is reduced by applying a multiplication factor that is higher than one (1). In addition, jitter is eliminated if the multiplication factor higher than one is an *integer* multiplication factor. The setting of the display refresh rate is for example done through the sending of an command to the display (e.g., an HDMI command), the command including a configuration setting of the display refresh rate.

According to a particular embodiment, the video encoding frame rate of a received video (audio/video stream), and thus the video decoding frame rate is determined by the receiver from measurement of a mean video frame interval (mean inter-video frame arrival time) over a sample of a received audio/video stream.

According to a different embodiment, the video encoding frame rate (and thus the video decoding frame rate) is determined from signalization related to an audio/video stream which includes the encoded video frames, such as from Sequence Parameter Set (SPS) or Picture Parameter Set (PPS) for H.264 encoded video, the SPS or PPS containing the video encoding frame rate, or obtained from an out-of-band signalization source.

According to a particular embodiment, the multiplication factor is advantageously chosen among display refresh rates supported by the display used for rendering the decoded video.

According to a particular embodiment, the supported display refresh rates are directly obtained from the display device, e.g., by reading the supported display refresh rates from the display's Extended Display Identification Data (EDID) as according to Video Electronics Standards Association (VESA). The EDID is a data structure provided by a digital display to describe its capabilities to a video source (e.g., a graphics card, receiver device). The EDID can be obtained from the display according to any of the High Definition Multimedia Interface (HDMI), the Digital Visual Interface (DVI), or the DisplayPort interface.

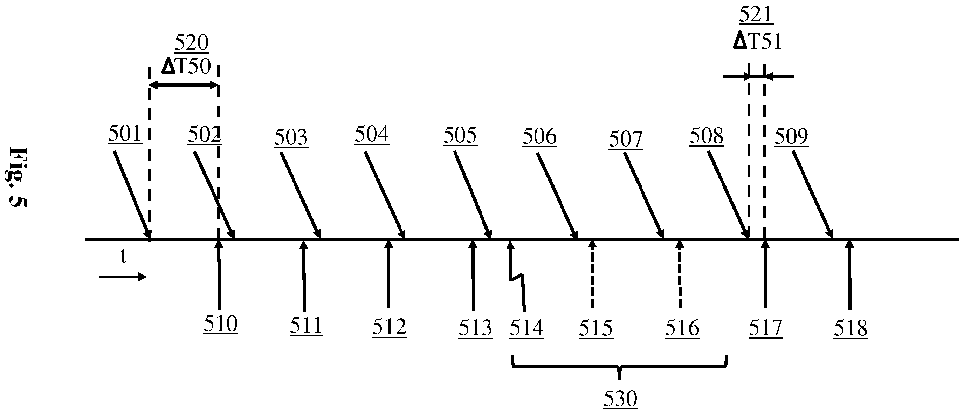

**Figure 5** is a further embodiment according to which the latency between the output of a decoded frame by the receiver's decoder and the display of the frame is further reduced by selectively choosing the moment of the transmission of the configuration command to the display. Arrows **501-509** indicate video frames being output by the receiver device. Arrows **510-518** indicate refreshes of the display device coupled to the receiver device. Until reference **514,** the transmission of the configuration command, and according to one of the embodiments described with the aid of figure 4, latency deltaT50 **(520)** between video frames output by the receiver and display of the video frame is constant. Jitter, tearing and stuttering are eliminated. However, latency can be further reduced. Arrow **514** is a transmission of a display mode configuration command to the display. The moment of transmission is chosen to be just after the output of video frames by the receiver device to the display, i.e., some milliseconds thereafter, for example 1, 2, 5, or 10ms thereafter. During **530,** the display is reconfiguring its display settings. Depending on the display hardware and software implementation, no image may be visible (an image freeze or black screen may occur) during the display reconfiguration. However, the display's internal refresh clock has been started upon the receipt of the configuration command **514.** At **517,** after a command processing delay that depends on the display implementation, the display is refreshed as it is ready to display frame **508** in the new configuration. Thus, according to this further improvement, the latency is advantageously reduced to deltaT51 **(521)** as the display refreshes are placed right (just, shortly) after the output of video frames by the receiver device. The sending of the display mode configuration command to the display is thus triggered by receipt of a decoded video frame from the video decoder.

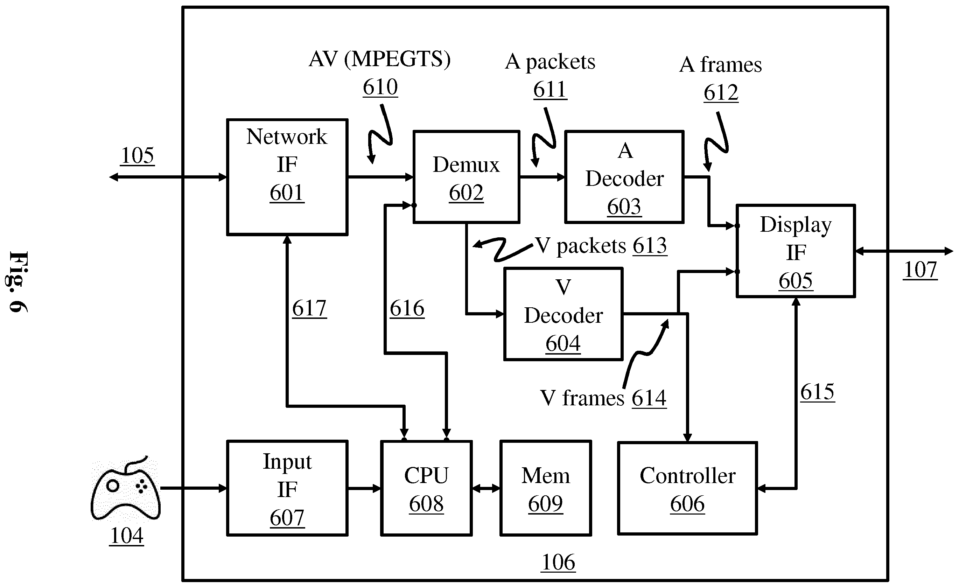

**Figure 6** is an embodiment of a receiver device **106** according to the present principles. The receiver device **106** is connected to network **105** (for example, a wired or wireless network), from which it receives an audio/video stream from a server or from a plurality of servers, and to which it transmits input actions. The receiver device **106** is further connected to a display device (not shown) via connection **107,** to which it transmits audio and/or video frames. Finally, receiver device **106** receives user input from an input device **104.** Memory **609** stores program instructions that define the functioning of the device, which instructions are executed by a Central Processing Unit (CPU) **608.** CPU **608** receives user input control instructions from input interface **607.** These instructions comprise for example selection of a video game and game control commands. According to the user input for selection of a video game, for example the user selects of a Uniform Resource Locator (URL) of the video game, the CPU transmits a request for connection to the URL to the network **105** via connection **617** to network interface **601.** A server in the network, following the selection of the URL, transmits a multiplexed stream including encoded audio/video packets to receiver device **106.** This stream is received by demultiplexer **602** from network interface **601** via link **610.** CPU **608** instructs the demultiplexer **602** to separate video and audio packets from the audio/video stream via link **616.** The demultiplexer transmits audio packets to audio decoder **603** via link **611,** and video packets via link **613** to video decoder **604.** Audio decoder **603** decodes the encoded audio packets and transmits decoded audio frames to display interface **605** via link **612.** Likewise, video decoder **604** decodes encoded video packets and outputs decoded video frames to display interface **605** via link **614.** Display interface **605** transforms the received audio and video frames into digital audio and video and transmits the digital audio and video to a display device connected to link **107.** The output of video decoder **604** is also connected via link **614** to controller **606** according to the present principles. The controller **606** determines inter-video frame arrival time and thus video fps from the received video frames. The controller **606** further may interrogate the display device through link **107,** directly or via display interface **605,** to obtain supported video resolutions and supported refresh rates, e.g., by reading the display's EDID information including supported video resolutions and video fps (supported video display modes, supported video display refresh rates). From these information sources, the controller **606** determines the best display configuration setting which reduces video jitter, stuttering and tearing. This display configuration is then transmitted by the controller **606** to the display interface **605.** Display interface **605** configures its digital audio/video output according to the display settings received from controller **606.** In addition, display interface **605** transmits a display configuration command to the display according to a protocol used for the link **107** between the display interface **605** and the display (e.g., according to HDMI, DVI, or DisplayPort). Instead of determining video fps from video frame inter-arrival time, controller **606** may determine video fps from signalization received, e.g., from in-band SPS, PPS, or from an out-of-band signalization source. According to a further embodiment, and to further reduce latency between output of video frames by the video decoder and display of those video frames by the display, controller **606** selects (chooses) the moment for transmission of display configuration information to the display interface **605** by placing the transmission of the configuration information several milliseconds after having received a video frame from the video decoder **604,** as shown in figure 5. The sending of the display mode configuration command to the display is thus triggered by receipt of a decoded video frame from the video decoder. According to a further embodiment (not shown), the input device and display device are integrated into the receiver device, for example in a mobile device such as a tablet or smart phone.

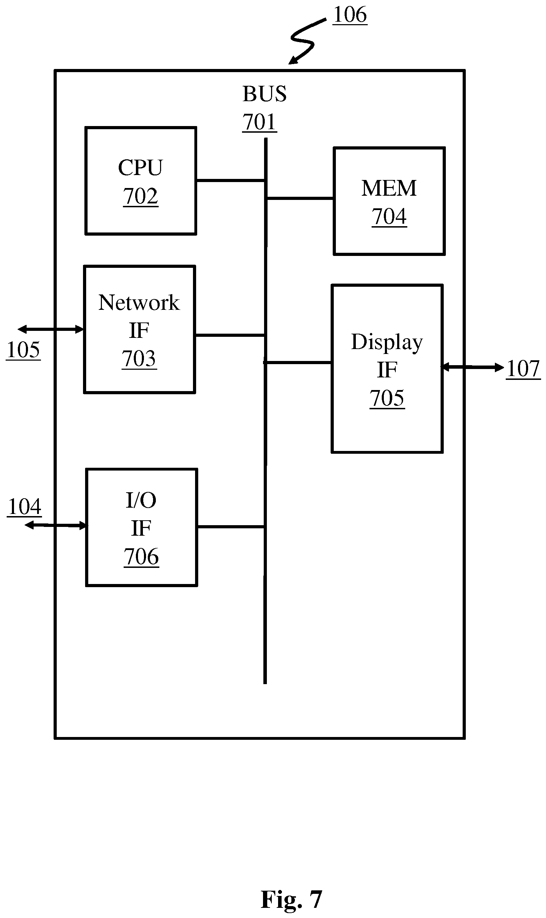

**Figure 7** is a different embodiment of a receiver device **106** according to the present principles. Receiver device **106** includes a central processing unit **702,** a network interface **703,** a memory **704,** a display interface **705,** and an input/output interface **706,** which elements are interconnected on a data communication bus **701.** Memory **704** stores computer-readable instructions that comprise a method according to the present principles. User input e.g., from a game pad **104** are received via I/O interface **706.** An audio/video stream e.g., an audio/video stream of a computer game is received via link **105** and network interface **703.** Video and audio frames are transmitted via link **107** to a display device. Demuxing and decoding of the audio/video stream is performed by the processor **702.** The processor further executes a control program stored in memory **704** performing a method according to the present principles and as described previously with reference to controller **606** of figure 6. According to a further embodiment, device **106** includes a combined display and input device, for example a touch screen, the user actions being received via a touch sensitive layer of the integrated display.

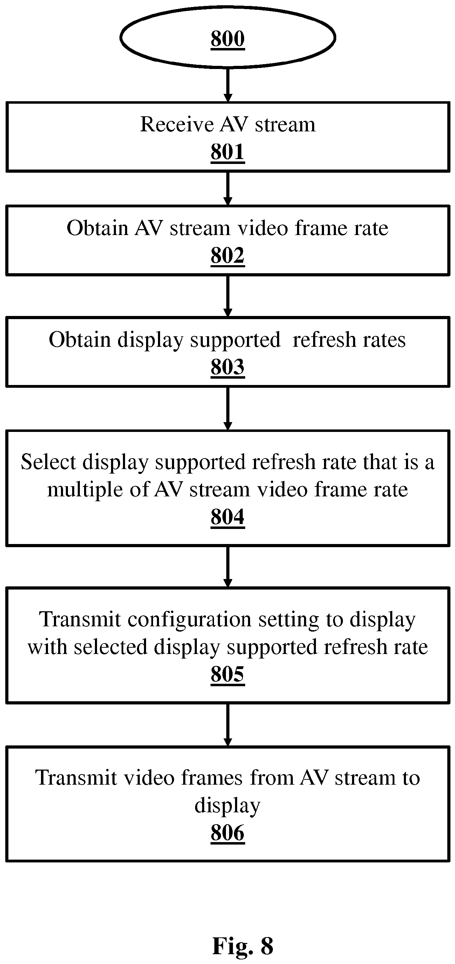

**Figure 8** is an exemplary method **800** of transmitting video frames from a video stream to a display. In a first step **801,** a video stream is received. This stream may also comprise audio. In step **802** a video encoding frame rate of said video stream is obtained. This video encoding frame rate may be obtained from out-band or in-band signalization, or from measuring video frame inter-arrival time for example at the output of video decoder **604.** In step **803,** display supported refresh rates for the display may be obtained by reading information provided by the display, for example by reading out the EDID. In step **804,** a display refresh rate that is a multiple of said video encoding frame rate is chosen (selected) among the display supported refresh rates. Preferably, this multiple is an integer multiple. In a step **805,** a display mode configuration command is transmitted to the display. The display mode configuration command includes the selected supported refresh rate. Finally, video frames (and possibly audio frames if the display integrates speakers) from the video stream are transmitted to the display in step **806.** Some of the steps of the method may be executed in a different order or be executed in parallel, for example, the stream is received from the network and video frames from the stream are transmitted to the display during execution of steps **802-806.** For example, step **804** of obtaining supported refresh rates from the display may be executed before all other steps.

It is to be appreciated that some elements in the drawings may not be used or be necessary in all embodiments. Some operations may be executed in parallel. Embodiments other than those illustrated and/or described are possible. For example, a device implementing the present principles may include a mix of hard- and software.

It is to be appreciated that aspects of the principles of the present disclosure can be embodied as a system, method or computer readable medium. Accordingly, aspects of the principles of the present disclosure can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the principles of the present disclosure can take the form of a computer readable storage medium. Any combination of one or more computer readable storage medium(s) can be utilized.

Thus, for example, it is to be appreciated that the diagrams presented herein represent conceptual views of illustrative system components and/or circuitry embodying the principles of the present disclosure. Similarly, it is to be appreciated that any flow charts, flow diagrams, state transition diagrams, pseudo code, and the like represent various processes which may be substantially represented in computer readable storage media and so executed by a computer or processor, whether such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. Some or all aspects of the storage medium may be remotely located (e.g., in the 'cloud'). It is to be appreciated that the following, while providing more specific examples of computer readable storage mediums to which the present principles can be applied, is merely an illustrative and not exhaustive listing, as is readily appreciated by one of ordinary skill in the art: a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. A method (800) of transmitting video frames from a video stream to a display, comprising:
receiving (801) a video stream;
obtaining (802) a video encoding frame rate of said video stream;
obtaining (803) display supported refresh rates for said display;
selecting (804) among said display supported refresh rates a refresh rate that is a multiple of said video encoding frame rate;
sending (805) a display mode configuration command to said display, said display mode configuration command comprising said selected refresh rate; and
sending (806) video frames of said video stream to said display device.

2. The method according to claim 1, wherein said multiple of said video encoding frame rate is an integer multiple.

3. The method according to claim 1 or 2, wherein said sending of said display mode configuration command to said display is triggered by receipt of a decoded video frame from a video decoder in said receiver device.

4. The method according to any of claims 1 to 3, further comprising obtaining said encoding video frame rate from measuring inter- video frame arrival rate.

5. The method according to any of claims 1 or 3, further comprising obtaining said encoding video frame rate from signalization related to said video stream.

6. The method according to claim 5, wherein said signalization is obtained from information comprised in the video stream according to Sequence Parameter Set or according to Picture Parameter Set.

7. The method according to any of claims 1 to 6, wherein said display supported refresh rates is obtained from the display by reading information provided by the display.

8. The method according to claim 7, wherein said information provided by the display is Extended Display Identification Data.

9. A device (106) for transmission of video frames from a video stream to a display, the device comprising:
a network interface (703) configured to receive a video stream;
at least one processor (702), configured to:
obtain a video encoding frame rate of said video stream;
obtain display supported refresh rates for said display;
select among said display supported refresh rates a refresh rate that is a multiple of said video encoding frame rate; and
a display interface (705) configured to:
send a display mode configuration command to said display, said display mode configuration command comprising said selected refresh rate; and
send video frames from said video stream to said display device.

10. The device according to claim 9, wherein at least one said processor is configured to select an integer multiple of said video encoding frame rate.

11. The device according to claim 9 or 10, wherein said at least one processor is further configured to trigger said sending of said display mode configuration command to said display by receipt of a decoded video frame from a video decoder.

12. The device according to any of claims 9 to 11, wherein said at least one processor is further configured to obtain said encoding video frame rate from measuring inter- video frame arrival rate.

13. The method according to any of claims 9 to 12, wherein said at least one processor is further configured to obtain said display supported refresh rates from the display by reading information provided by the display.

14. The device according to any of claims 9 to 13, wherein said device is a Set Top Box.

15. The device according to any of claims 9 to 13, wherein said device is a mobile communication device.
